# EUROPEAN PATENT SPECIFICATION

(11) **EP 2 159 147 B1**
(45) Date of publication and mention of the grant of the patent: **13.02.2013**
(21) Application number: 09251695.4
(22) Date of filing: 01.07.2009
(51) Int. Cl.: B62K 11/04

(54) **Motorcycle with inclination sensor**
Motorrad mit Neigungssensor
Motocyclette avec détecteur d'inclinaison

(30) Priority: 29.08.2008 JP 2008221167
(43) Date of publication of application: 03.03.2010
(73) Proprietor: Honda Motor Co., Ltd., Minato-ku Tokyo 107-8556 (JP)
(72) Inventor: Isomura, Mamoru, Saitama 351-0193 (JP); Goto, Kaori, Saitama 351-0193 (JP); Yoshimura, Yuki, Saitama 351-0193 (JP)
(74) Representative: Stevens, Jason Paul

(56) References cited:
- EP-A1- 1 759 911
- EP-A1- 1 792 817
- EP-A2- 1 780 109

## Description

The present invention relates to a motorcycle and, more particularly, to an arrangement of an inclination sensor of a motorcycle.

A motorcycle is already known in which an inclination sensor is attached to a bottom surface of a storage box, which is an on-board component detachably attached to a vehicle body (see, for example, JP-A No. 2007-237883).

In the motorcycle disclosed in JP-A No. 2007-237883, the inclination sensor is attached to the bottom surface of the storage box, so that when removal of the inclination sensor is required for maintenance or the like, the inclination sensor is removed from the storage box after removal of the storage box from the vehicle body, or the inclination sensor is exposed to the outside by, for example, removing a vehicle body cover covering a periphery of the storage box from the vehicle body. An operation for detaching the inclination sensor is thus troublesome.

A motorcycle including the features of the preamble of claims 1 and 6 is known from EP-1 792 817.

The present invention has been addressed to the foregoing problem and it is an object of at least the preferred embodiments of the present invention to provide a motorcycle which facilitates an operation of attaching or detaching an inclination sensor, and can thus improve maintainability.

In order to attain the above-mentioned object, there is provided a motorcycle comprising: a vehicle body frame including a main frame extending rearward from a head pipe, a down tube extending downward from the head pipe, and a gusset which is joined to a rear portion of the head pipe, a front portion of the main frame, and an upper portion of the down tube in order to reinforce a periphery of the head pipe; and an inclination sensor for detecting a tilt angle of the motorcycle; wherein the inclination sensor is arranged laterally of the gusset.

The inclination sensor is arranged laterally of the gusset joined to the rear portion of the head pipe, the front portion of the main frame, and the upper portion of the down tube in order to reinforce the periphery of the head pipe, so that a forward side of the vehicle is open on the lateral side of the gusset and easy access to the inclination sensor is provided. Thus, it is unnecessary to remove any parts other than the inclination sensor when the inclination sensor has to be removed, and so the operation of attaching and detaching the inclination sensor can be easily carried out, and maintainability of the inclination sensor can be improved. Moreover, the gusset is arranged at a relatively high position of the vehicle and the inclination sensor is arranged laterally of the gusset, and so it is unlikely that muddy water, stones and the like which are splashed up by the wheel will hit the inclination sensor.

Preferably, the inclination sensor is arranged at a more upward position than an upper end of a front fender covering an upper side of a front wheel.

As a result, when maintenance is performed, the front fender does not impede the maintenance, and the operation of attaching or detaching the inclination sensor can be easily carried out. Moreover, thanks to the front fender, it is less likely that muddy water, stones and so on, which are splashed up by the wheel, will hit the inclination sensor.

In a further preferred form, the motorcycle is provided with a front cowl which covers at least a part of the head pipe, the main frame and the down tube from a lateral side; and at least a part of a lateral side of the inclination sensor is covered with the front cowl.

As a result, it is less likely that muddy water, stones and so on will hit the inclination sensor from the lateral side, while access to the inclination sensor from the forward side is still provided.

Preferably, a lower portion of the inclination sensor comes out of the front cowl, when viewed from a lateral side of the motorcycle, so that it is possible to prevent a failure to mount the inclination sensor.

In a further preferred form, the front cowl is attached to a front cowl stay which is provided at the gusset; and the inclination sensor is arranged forward of the front cowl stay.

As a result, when the operation of attaching or detaching the inclination sensor is performed, the front cowl stay does not disturb the operation, and the inclination sensor can be easily attached and detached.

According to a second aspect of the invention, there is provided a motorcycle comprising: a main frame extending rearward from a head pipe; an engine supported in a downward direction of the main frame; a front fender covering an upper side of a front wheel; a front cowl covering at least a part of the main frame from a lateral side; and an inclination sensor for detecting a tilt angle of the motorcycle; wherein the inclination sensor is arranged at a more forward position than the engine, at a more downward position than an upper end of the head pipe, and at a more upward position than an upper end of the front fender, and inside the front cowl.

According to this aspect, an inner side of the front cowl is open forward of the vehicle, so it is possible to easily get access to the inclination sensor from the forward direction of the vehicle and it is unnecessary to detach any parts other than the inclination sensor when the inclination sensor is required to be detached. Moreover, as the inclination sensor is arranged at a more downward position than the upper end of the head pipe, the inclination sensor is close to the engine which is a vibration source, and the inclination sensor can be arranged in a position in which amplification of the vibration of the engine is reduced. Moreover, since the inclination sensor is arranged at a more upward position than the upper end of the front fender, when maintenance is performed, the front fender does not disturb the maintenance, and the operation to attach or detach the inclination sensor can be easily carried out. Moreover, it is less likely that muddy water, stones and the like which are splashed up by the wheel will hit the inclination sensor, thanks to the front fender. Moreover, as the inclination sensor is arranged inside the front cowl, it is less likely that the inclination sensor will be hit by muddy water, stones and so on from the lateral side, while access to the inclination sensor from the forward direction is still provided. Moreover, the inclination sensor is arranged at the more forward position than the engine, so that the inclination sensor is not subjected to heat of the engine and is easily cooled by the travelling wind.

Preferably, a main harness that bundles wires for a meter and lighting equipment is wired on a left side of the main frame and the inclination sensor is arranged on the left side of the main frame.

Thus, a wire of the inclination sensor can be merged with the main harness and is not required to be wired across the main frame. Thus, the wire of the inclination sensor can be made shorter as compared to a case where the inclination sensor is arranged on a right side of the main frame.

Preferred embodiments of the invention will now be described by way of example only and with reference to the accompanying drawings, in which:
Fig. 1 is a left side view of an embodiment of a motorcycle according to the present invention;
Fig. 2 is a partially cut-away front view of the motorcycle shown in Fig. 1;
Fig. 3 is an enlarged front view illustrating a periphery of an inclination sensor shown in Fig. 2;
Fig. 4 is an enlarged left side view illustrating the periphery of the inclination sensor shown in Fig. 3;
Fig. 5 is a perspective view of the periphery of the inclination sensor shown in Fig. 3, as viewed from a rearward and left direction; and
Fig. 6 is a schematic plan view which is of assistance in explaining a vehicle body frame, the inclination sensor, a fuel pump, a control device, and wiring of a main harness.

An embodiment of a motorcycle according to the present invention will be discussed in detail hereinafter with reference to the drawings. Incidentally, the drawings shall be viewed on the basis of orientations of reference numerals, and the terms forward, rearward, left, right, upward and downward which are referred to hereinafter shall be based on a direction as viewed from the position of a rider. In the drawings, a forward direction of a vehicle body is denoted by Fr, a rearward direction of the vehicle body is denoted by Rr, a left side of the vehicle body is denoted by L, a right side of the vehicle body is denoted by R, an upward direction of the vehicle body is denoted by U, and a downward direction of the vehicle body is denoted by D.

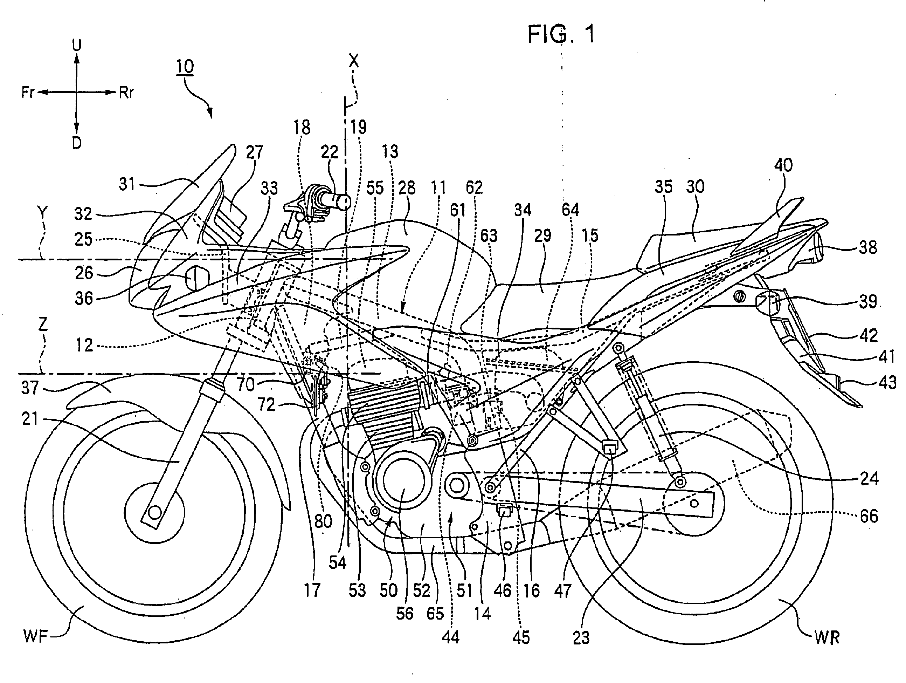

As shown in Fig. 1, the motorcycle 10 according to the embodiment of the present invention is configured such that a vehicle body frame 11 thereof includes a head pipe 12 provided at a forward end of the vehicle body frame, a main frame 13 extending rearward and downward from the head pipe 12, a pivot plate 14 connected to a rear end portion of the main frame 13, a pair of left and right seat frames 15 connected to an intermediate portion of the main frame 13 and extending rearward and upward, a pair of left and right sub-frames 16 connected to the pivot plate 14, extending rearward and upward, and connected at rear end portions thereof to rear end portions of the seat frames 15, a down tube 17 extending rearward and downward from the head pipe 12, a gusset 18 which is joined to a rear portion of the head pipe 12, a front portion of the main frame 13 and an upper portion of the down tube 17 in order to reinforce a periphery of the head pipe 12, and a reinforcing frame 19 interconnecting the main frame 13 and the gusset 18. An engine 50 and a transmission 51 integrally provided at a rear portion of the engine 50 are attached to the main frame 13, the pivot plate 14 and the down tube 17.

The motorcycle 10 further includes a front fork 21 steerably supported to the head pipe 12, a front wheel WF rotatably supported at a lower end portion of the front fork 21, a steering handlebar 22 mounted to an upper end portion of the front fork 21, a swing arm 23 swingably supported on the pivot plate 14, a rear wheel WR rotatably supported at a rear end portion of the swing arm 23, a cushion unit 24 connected to the swing arm 23 and a reinforcing member, a headlight 26 and a meter 27 which are attached to the head pipe 12 through a forward stay 25, a fuel tank 28 fixed to an upper portion of the main frame 13, and a rider's seat 29 and a pillion 30 which are provided above the seat frames 15.

Incidentally, in Fig. 1, a reference numeral 31 denotes a wind screen, a reference numeral 32 denotes a front top cowl, a reference numeral 33 denotes a front cowl, a reference numeral 34 denotes a side cowl, a reference numeral 35 denotes a rear cowl, a reference numeral 36 denotes a front blinker, a reference numeral 37 denotes a front fender, a reference numeral 38 denotes a tail light, a reference numeral 39 denotes a rear blinker, a reference numeral 40 denotes a grab rail, a reference numeral 41 denotes a rear fender, a reference numeral 42 denotes a license plate, a reference numeral 43 denotes a reflector, a reference numeral 44 denotes a fuel pump, a reference numeral 45 denotes a control device (ECU), a reference numeral 46 denotes a main step, and a reference numeral denotes a pillion step.

The engine 50 is a single-cylinder engine. As shown in Fig. 1, an outer shell of the engine 50 mainly includes a crankcase 52, a cylinder block 53 attached to a forward, upper end portion of the crankcase 52, a cylinder head 54 attached to an upper end portion of the cylinder block 53, a cylinder head cover 55 covering an upper opening of the cylinder head 54, an ACG (generator) cover 56 covering an opening in a left side surface of the crankcase 52, and a clutch cover (not shown) covering an opening in a right side surface of the crankcase 52.

Moreover, as shown in Fig. 1, a throttle body 62 is connected through an intake pipe 61 to an intake port (not shown) formed in a rear portion wall of the cylinder head 54 and an air cleaner 64 is connected through a connection pipe 63 to an upstream end of the throttle body 62. Moreover, a muffler 66 is connected through an exhaust pipe 65 to an exhaust port (not shown) formed in a front portion wall of the cylinder head 54.

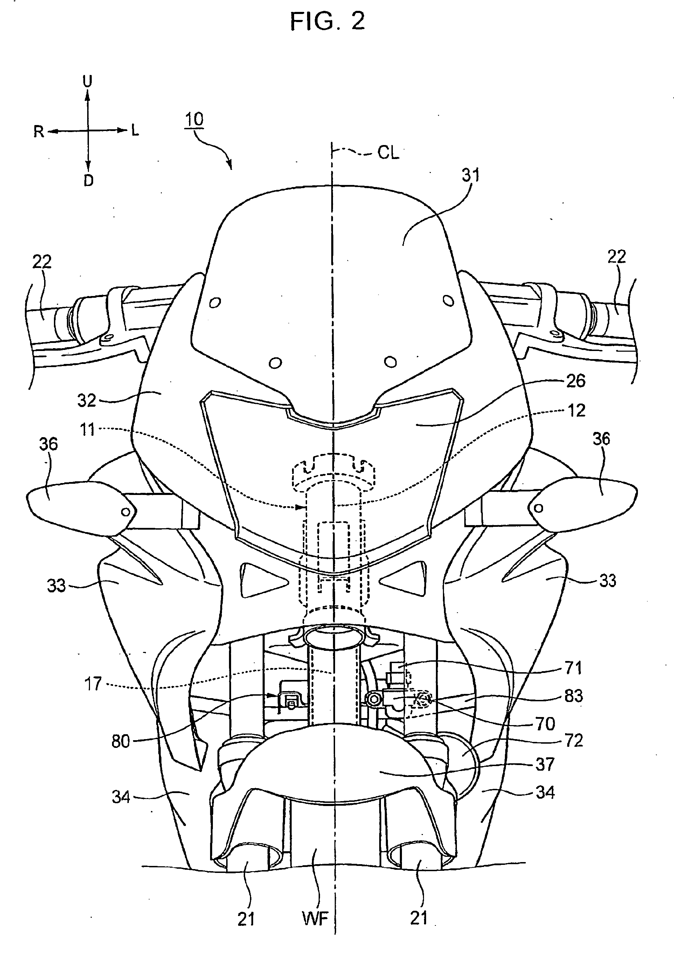

In this embodiment, as shown in Figs. 2 to 5, an inclination sensor 70 for detecting a tilt angle of the vehicle is arranged on a left lateral side of the gusset 18 of the vehicle body frame 11. This inclination sensor 70 is attached to a forward portion of a front cowl stay 80 provided on a rear surface of the gusset 18. Incidentally, a reference numeral 71 in drawings denotes a coupler which is provided at an upper end portion of the inclination sensor 70, and to which a wire (not shown) is connected.

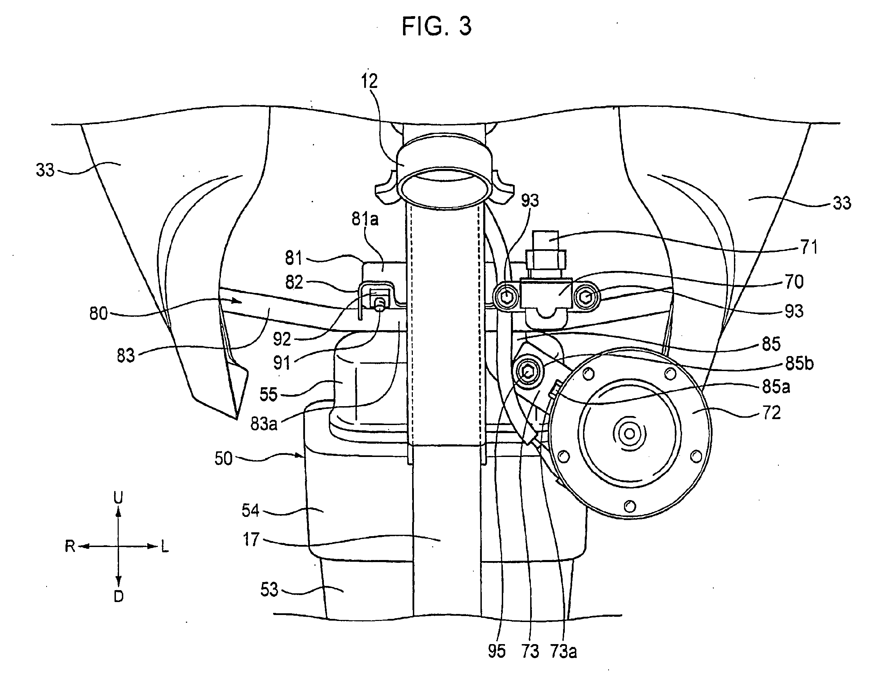

As shown in Figs. 3 to 5, the front cowl stay 80 is arranged so as to straddle the rear surface of the gusset 18 and includes a base stay 81 welded onto both side surfaces of the gusset 18, a base plate 82 fastened by bolts 91 to both end portions of the base stay 81 in the direction of width of the vehicle, a pipe-shaped stay body 83 welded at a central portion thereof to a rear edge of the base plate 82 and extending to both sides in the direction of width of the vehicle, an inclination sensor stay 84 welded to a left bent portion 81a of bent portions 81a, 81a formed at the end portions of the base stay 81 in the direction of width of the vehicle, and extending outward in the direction of width of the vehicle, and a horn stay 85 welded to a left end portion of a parallel portion 83a of the stay body 83 which extends along the direction of width of the vehicle, and which horn stay 85 extends downward. Moreover, the bolts 91 are threaded into weld nuts 92 fixed onto both end portions of a lower surface of the base plate 82 in the direction of width of the vehicle.

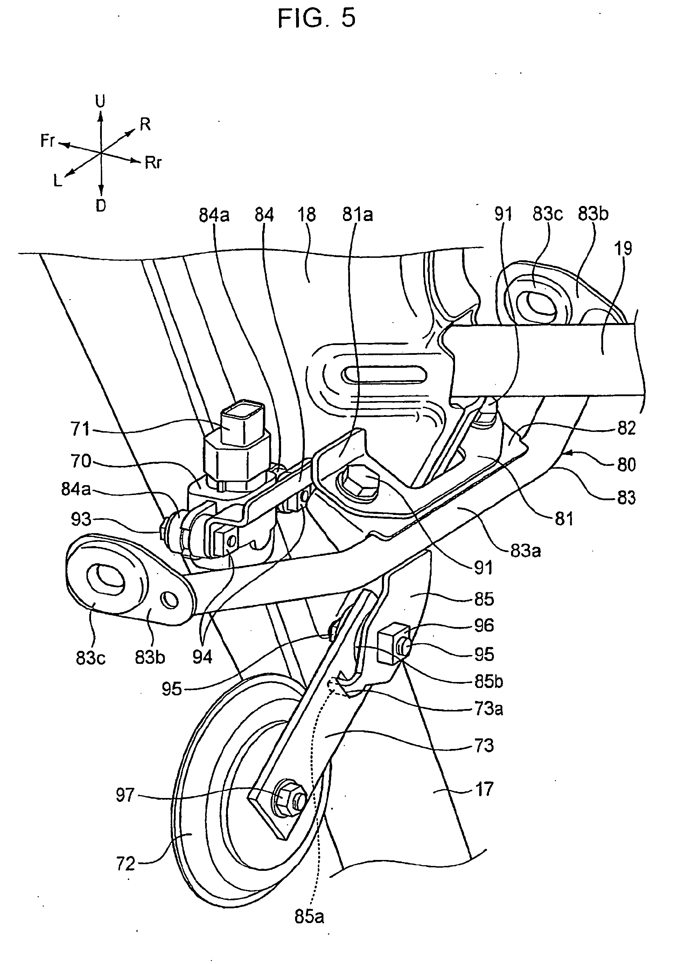

Moreover, as shown in Fig. 5, cowl mounting portions 83b for mounting the front cowl 33 which covers at least a part of the head pipe 12, the main frame 13 and the down tube 17 from the lateral side are formed at both end portions of the stay body 83 in the direction of width of the vehicle. Bush members 83c which are provided interposedly between the cowl mounting portions 83b and cowl fastening members (not shown) are attached to the cowl mounting portions 83b.

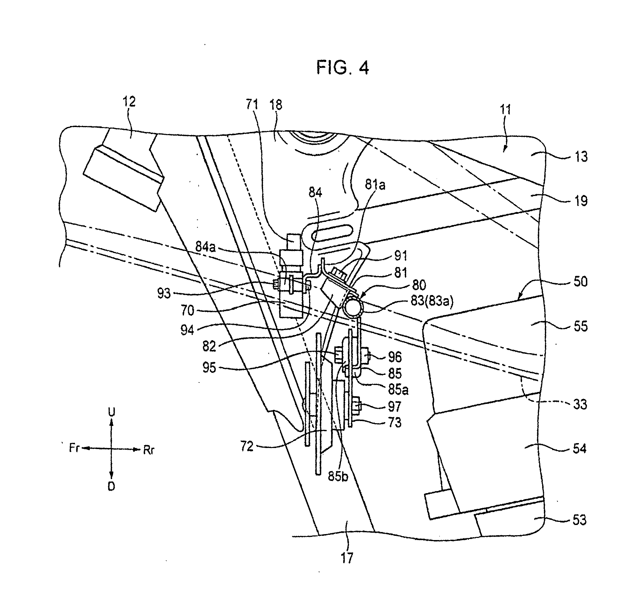

As shown in Figs. 4 and 5, the inclination sensor 70 is fastened through bush members 84a, 84a to both end portions of the inclination sensor stay 84 in the direction of width of the vehicle by bolts 93, 93. The bolts 93 are threaded into weld-nuts 94 which are fixed onto both end portions of a rear surface of the inclination sensor stay 84 in the direction of width of the vehicle.

As shown in Figs. 3 to 5, a horn mounting plate 73 is fastened through a bush member 85b to the horn stay 85 by a bolt 95. A horn 72 is fastened to a tip end portion of the horn-mounting plate 73 by a nut 97. Moreover, a claw portion 85a is formed at a tip end portion of the horn stay 85, and is hooked in a hole 73a formed in the horn-mounting plate 73 to restrict rotation of the horn-mounting plate 73. Moreover, the bolt 95 is threaded from a forward direction into a weld-nut 96 fixed onto a rear surface of the horn stay 85.

As shown in Figs. 1 and 2, in this embodiment, the inclination sensor 70 is arranged at a more upward position than an upper end of the front fender 37 covering an upper side of the front wheel WF, and also arranged adjacent a left lateral side of the down tube 17. Moreover, the inclination sensor 70 is arranged within the front fork 21, when viewed from a front side of the vehicle.

In this embodiment, as shown in Fig. 4, an upper portion of a left lateral side of the inclination sensor 70 is covered by the front cowl 33, whereas a lower portion of the left lateral side of the inclination sensor 70 is not covered by the front cowl 33 and is exposed to the outside. Moreover, as shown in Fig. 1, the inclination sensor 70 is arranged at a position in which a part of the inclination sensor 70 is superposed on the down tube 17 at a lower portion of the gusset 18.

Moreover, in this embodiment, as shown in Fig. 1, the inclination sensor 70 is arranged at a more forward position than a forward end of the engine 50 (as shown by line X in Fig. 1), at a more downward position than an upper end of the head pipe 12 (as shown by line Y in Fig. 1), at a more upward position than an upper end of the front fender 37 (as shown by line Z in Fig. 1), and inside the front cowl 33.

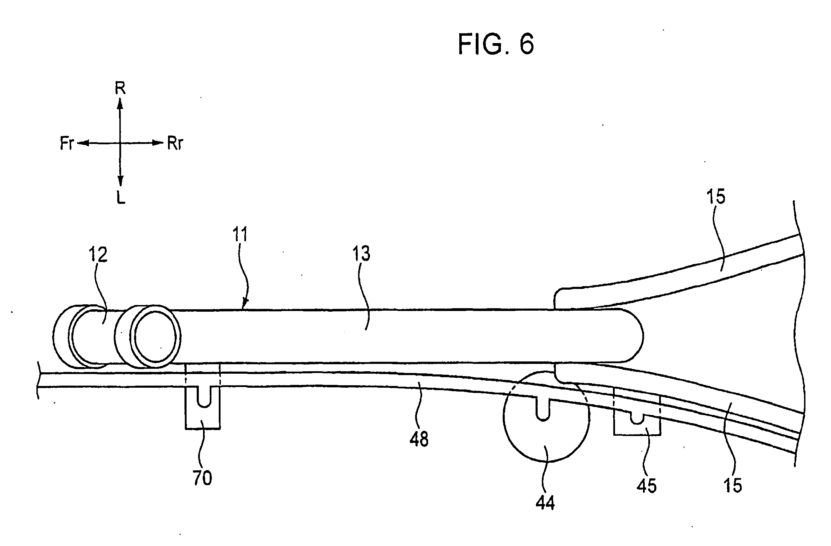

In this embodiment, the inclination sensor 70 is arranged on the left side of the vehicle. This is attributable to the fact that, as shown in Fig. 6, the fuel pump 44 and the control device (ECU) 45 are arranged at the left side of the vehicle and, correspondingly, a main harness 48 which bundles wires for the meter and the lighting equipment is wired on the left side of the vehicle body frame 11. If the inclination sensor 70 is arranged on the right side of the vehicle, a wire for the inclination sensor 70 must be extend across the main frame 13 in order that the wire of the inclination sensor 70 can be merged with the main harness 48, so that the wire is made longer.

As discussed above, in the motorcycle 10 of the present embodiment, the inclination sensor 70 is arranged on the left lateral side of the gusset 18 which is joined to the rear portion of the head pipe 12, the front portion of the main frame 13, and the upper portion of the down tube 17 in order to reinforce the periphery of the head pipe 12. A forward side of the vehicle at the lateral side of the gusset 18 is often open, and so easy access to the inclination sensor 70 is provided and, when the inclination sensor 70 is removed, it is unnecessary to remove any parts other than the inclination sensor 70. Thus, the operation of attaching or detaching the inclination sensor 70 can be easily carried out and maintainability of the inclination sensor 70 can be improved. Moreover, the gusset 18 is present at a relatively high position of the vehicle and the inclination sensor 70 is arranged on the left lateral side of the gusset 18, so that it is unlikely that muddy water, stones and the like, which are splashed up by the wheel, will hit the inclination sensor 70.

Moreover, according to this embodiment, the inclination sensor 70 is arranged at a more upward position than the upper end of the front fender 37 covering the upper side of the front wheel WF, so that when maintenance is carried out, the front fender 37 is unlikely to get in the way of the maintenance, and the operation of attaching and detaching the inclination sensor 70 can be easily carried out. Moreover, it is more unlikely that muddy water, stones and so on which are splashed up by the wheel will hit the inclination sensor 70.

Moreover, in this embodiment, the motorcycle is provided with the front cowl 33 covering at least the part of the head pipe 12, the main frame 13 and the down tube 17 from the lateral side, and at least a part of the left lateral side of the inclination sensor 70 is covered with the front cowl 33. Thus, it is unlikely that muddy water, stones and so on will hit the inclination sensor 70 from the lateral side, while it is still possible to access the inclination sensor 70 from the forward direction.

Moreover, according to this embodiment, the lower portion of the inclination sensor 70 comes out of the front cowl 33 when viewed from the lateral side of the vehicle, so that it is possible to prevent a failure to turn the inclination sensor 70 on.

Moreover, in the motorcycle 10 of this embodiment, the front cowl 33 is attached to the front cowl stay 80 provided at the gusset 18, and the inclination sensor 70 is provided at a more forward position than the front cowl stay 80, so that when the operation to attach or detach the inclination sensor 70 is carried out, the front cowl stay 80 does not disturb the operation, and attaching and detaching of the inclination sensor 70 can be easily carried out.

Moreover, in this embodiment, the inner side of the front cowl 33 is open forward of the vehicle, so that it is possible to easily get access to the inclination sensor 70 from the forward direction of the vehicle and it is unnecessary to detach any parts other than the inclination sensor 70 when the inclination sensor is removed. Moreover, the inclination sensor 70 is arranged at a more downward position than the upper end of the head pipe 12, so that the inclination sensor 70 is close to the engine 50 which is a vibration source, and the inclination sensor 70 can be arranged in a position in which amplification of the vibration of the engine 50 is reduced. Moreover, the inclination sensor 70 is arranged at a more upward position than the upper end of the front fender 37, so that when maintenance is are performed, the front fender 37 does not get in the way, and the operation to attach or detach the inclination sensor 70 can be easily performed. Moreover, it is unlikely that muddy water, stones and the like, which are splashed up by the wheel, will hit the inclination sensor 70, thanks to the front fender 37. Moreover, as the inclination sensor 70 is arranged inside the front cowl 33, it is less likely that muddy water, stones and the like will hit the inclination sensor 70, while easy access to the inclination sensor 70 from the forward direction is provided. Moreover, the inclination sensor 70 is arranged at a more forward position than the engine 50, so that the inclination sensor 70 is not subjected to the heat of the engine 50 and can be cooled by being subjected to travelling wind.

Moreover, according to this embodiment, the main harness 48 which bundles the wires for the meter and lighting equipment is wired on the left side of the main frame 13 and the inclination sensor 70 is arranged on the left side of the main frame 13, so that the wire of the inclination sensor 70 does not need to cross the main frame 13 in order for the wire of the inclination sensor 70 to be merged with the main harness 48. Thus, the wire of the inclination sensor 70 can be made shorter as compared to a case where the inclination sensor 70 is arranged on the right side of the main frame 13.

Moreover, in this embodiment, the inclination sensor 70 is arranged within the front fork 21, as viewed from the front side of the vehicle, so that the inclination sensor 70 is arranged near a centre line C of the vehicle (as shown in Fig. 2). Thus, the tilt of the motorcycle 10 can be detected with high precision and the inclination sensor 70 can be prevented from projecting outward of the vehicle.

Moreover, in this embodiment, the inclination sensor 70 is arranged forward of the gusset 18 to the extent that it is superposed on the down tube 17 at the lower part of the gusset 18, thus providing easy access to the inclination sensor 70.

Moreover, according to this embodiment, the bolts 93, 95 for attachment of the inclination sensor 70 and the horn 72 are adapted to be threadedly attached from the forward portion of the vehicle which is open, so that the operation of attaching and detaching the inclination sensor 70 and the horn 72 can be easily performed.

Incidentally, the present invention is not limited to the embodiment illustratively described above, and various modifications can be suitably made to the embodiment without departing from the scope of the invention claimed.

While the case where the inclination sensor 70 and the horn 72 are arranged on the left side of the gusset 18 has been illustratively discussed above in connection with the embodiment, the present invention is not limited to such a case and, for example, the inclination sensor 70 and the horn 72 may be arranged on the right side of the gusset 18.

## Claims

1. A motorcycle (10) comprising:
a vehicle body frame (11) including a main frame (13) extending rearward from a head pipe (12), a down tube (17) extending downward from the head pipe (12), and a gusset (18) which is joined to a rear portion of the head pipe (12), a front portion of the main frame (13), and an upper portion of the down tube (17) in order to reinforce a periphery of the head pipe (12); and
an inclination sensor (70) for detecting a tilt angle of the motorcycle; **characterized in that**
the inclination sensor (70) is arranged laterally of the gusset (18).

2. The motorcycle according to claim 1, wherein the inclination sensor (70) is arranged at a more upward position than an upper end of a front fender (37) covering an upper side of a front wheel (WF).

3. The motorcycle according to claim 1 or 2, wherein:
the motorcycle (10) is provided with a front cowl (33) which covers at least a part of the head pipe (12), the main frame (13) and the down tube (17) from a lateral side; and
at least a part of a lateral side of the inclination sensor (70) is covered with the front cowl (33).

4. The motorcycle according to claim 3, wherein a lower portion of the inclination sensor (70) comes out of the front cowl (33), when viewed from a lateral side of the motorcycle.

5. The motorcycle according to claim 3, wherein:
the front cowl (33) is attached to a front cowl stay (80) which is provided at the gusset (18); and
the inclination sensor (70) is arranged forward of the front cowl stay (80).

6. A motorcycle (10) comprising:
a main frame (13) extending rearward from a head pipe (12);
an engine (50) supported in a downward direction of the main frame (13);
a front fender (37) covering an upper side of a front wheel (WF);
a front cowl (33) covering at least a part of the main frame (13) from a lateral side; and
an inclination sensor (70) for detecting a tilt angle of the motorcycle; **characterized in that**
the inclination sensor (70) is arranged at a more forward position than the engine (50), at a more downward position than an upper end of the head pipe (12), and at a more upward position than an upper end of the front fender (37), and inside the front cowl (33).

7. The motorcycle according to claim 1 or 6, wherein a main harness (48) that bundles wires for a meter (27) and lighting equipment (26) is wired on a left side of the main frame (13) and the inclination sensor (70) is arranged on the left side of the main frame (13).

## Patentansprüche

1. Motorrad (10), Folgendes umfassend:
einen Fahrzeugrahmen (11), der einen Hauptrahmen (13) beinhaltet, der sich von einem Steuerkopf (12) nach hinten erstreckt, ein Unterrohr (17), das sich von Steuerkopf (12) nach unten erstreckt, und ein Kreuzblech (18), das mit einem hinteren Abschnitt des Steuerkopfes (12), einem vorderen Abschnitt des Hauptrahmens (13) und einem oberen Abschnitt des Unterrohres (17) verbunden ist, um einen Umfangsbereich des Steuerkopfes (12) zu verstärken, und
einen Neigungssensor (70) zum Erkennen eines Neigungswinkels des Motorrades,
**dadurch gekennzeichnet, dass** der Neigungssensor (70) seitlich vom Kreuzblech (18) angeordnet ist.

2. Motorrad nach Anspruch 1, wobei der Neigungssensor (70) an einer Position angeordnet ist, die sich weiter oben befindet als ein oberes Ende eines Vorderkotflügels (37), der eine Oberseite eines Vorderrades (WF) abdeckt.

3. Motorrad nach Anspruch 1 oder 2, wobei:
das Motorrad (10) mit einer Frontschale (33) ausgestattet ist, die mindestens einen Teil des Steuerkopfes (12), des Hauptrahmens (13) und des Unterrohrs (17) seitlich abdeckt, und
mindestens ein Teil einer Seite des Neigungssensors (70) mit der Frontschale (33) abgedeckt ist.

4. Motorrad nach Anspruch 3, wobei ein unterer Abschnitt des Neigungssensors (70), von einer Seite des Motorrades aus betrachtet, aus der Frontschale (33) herausragt.

5. Motorrad nach Anspruch 3, wobei:
die Frontschale (33) an einer Frontschalenverankerung (80) angebracht ist, die am Kreuzblech (18) bereitgestellt ist, und
der Neigungssensor (70) vor der Frontschalenverankerung (80) angeordnet ist.

6. Motorrad (10), umfassend:
einen Hauptrahmen (13), der sich von einem Steuerkopf (12) nach hinten erstreckt,
einen Motor (50), der in Abwärtsrichtung vom Hauptrahmen (13) getragen wird,
einen Vorderkotflügel (37), der mindestens eine Oberseite eines Vorderrades (WF) abdeckt,
eine Frontschale (33), die mindestens einen Teil des Hauptrahmens (13) seitlich abdeckt, und
einen Neigungssensor (70) zum Erkennen eines Neigungswinkels des Motorrades,
**dadurch gekennzeichnet, dass** der Neigungssensor (70) im Inneren der Frontschale (33) und an einer Position angeordnet ist, die sich weiter vorn befindet als der Motor (50), weiter unten als ein oberes Ende des Steuerkopfes (12) und weiter oben als ein oberes Ende des Vorderkotflügels (37).

7. Motorrad nach Anspruch 1 oder 6, wobei ein Hauptkabelbaum (48), der Kabel für Mess- (27) und Beleuchtungseinrichtungen (26) bündelt, an der linken Seite des Hauptrahmens (13) entlang geführt ist und der Neigungssensor (70) an der linken Seite des Hauptrahmens (13) angeordnet ist.

## Revendications

1. Motocyclette (10) comprenant :
un cadre de corps de véhicule (11) comprenant un cadre principal (13) s'étendant vers l'arrière depuis un tube de tête (12), un tube descendant (17) s'étendant vers le bas depuis le tube de tête (12) et un gousset (18) qui est joint à une portion arrière du tube de tête (12), à une portion avant du cadre principal (13) et à une portion supérieure du tube descendant (17) afin de renforcer une périphérie du tube de tête (12) ; et
un capteur d'inclinaison (70) pour détecter un angle d'inclinaison de la motocyclette ; **caractérisée en ce que**
le capteur d'inclinaison (70) est aménagé latéralement par rapport au gousset (18).

2. Motocyclette selon la revendication 1, dans laquelle le capteur d'inclinaison (70) est aménagé en position plus haute qu'une extrémité supérieure d'un garde-boue avant (37) recouvrant un côté supérieur d'une roue avant (WF).

3. Motocyclette selon la revendication 1 ou la revendication 2, dans laquelle :
la motocyclette (10) est pourvue d'un capot avant (33) qui recouvre au moins une partie du tube de tête (12), le châssis principal (13) et le tube descendant (17) depuis un côté latéral ; et
au moins une partie d'un côté latéral du capteur d'inclinaison (70) est recouverte par le capot avant (33).

4. Motocyclette selon la revendication 3, dans laquelle une portion inférieure du capteur d'inclinaison (70) ressort du capot avant (33) lorsqu'on l'observe d'un côté latéral de la motocyclette.

5. Motocyclette selon la revendication 3, dans laquelle :
le capot avant (33) est fixé à un support (80) du capot avant qui est prévu au niveau du gousset (18) ; et
le capteur d'inclinaison (70) est aménagé à l'avant du support (80) du capot avant.

6. Motocyclette (10) comprenant :
un cadre principal (13) s'étendant vers l'arrière depuis un tube de tête (12) ;
un moteur (50) supporté dans la direction descendante du cadre principal (13) ;
un garde-boue avant (37) recouvrant un côté supérieur d'une roue avant (WF) ;
un capot avant (33) recouvrant au moins une partie du cadre principal (13) depuis un côté latéral ; et
un capteur d'inclinaison (70) pour détecter un angle d'inclinaison de la motocyclette ;
**caractérisée en ce que** :
le capteur d'inclinaison (70) est aménagé dans une position plus avancée que le moteur (50), dans une position plus basse qu'une extrémité supérieure du tube de tête (12) et dans une position plus haute qu'une extrémité supérieure du garde-boue avant (37) et à l'intérieur du capot avant (33).

7. Motocyclette selon la revendication 1 ou la revendication 6, dans laquelle un harnais principal (48) qui regroupe des fils pour un dispositif de mesure (27) et un équipement d'éclairage (26) est câblé sur le côté gauche du cadre principal (13) et le capteur d'inclinaison (70) est aménagé sur le côté gauche du cadre principal (13).
